# EUROPEAN PATENT APPLICATION

(11) **EP 4 432 447 A1**
(43) Date of publication of application: **18.09.2024**
(21) Application number: 22941007.1
(22) Date of filing: 07.05.2022
(51) Int. Cl.: H01M 50/40, H01M 50/434

(54) **ELECTRODE ASSEMBLY, BATTERY CELL, BATTERY, AND ELECTRIC APPARATUS**

(71) Applicant: Contemporary Amperex Technology Co., Limited, Ningde, Fujian 352100 (CN)
(72) Inventor: SUN, Dongsheng, Ningde, Fujian 352100 (CN); GU, Hui, Ningde, Fujian 352100 (CN)
(74) Representative: Holt, Lucy Rose
(86) International application number: PCT/CN2022/091551
(87) International publication number: WO 2023/216038

(57) **Abstract**

The present application relates to the technical field of batteries, and provides an electrode assembly, a battery cell, a battery, and an electric apparatus. The electrode assembly comprises a negative electrode sheet, a separator and a positive electrode sheet, the separator being disposed between the negative electrode sheet and the positive electrode sheet. The positive electrode sheet comprises a positive electrode active material layer, and the separator has an extension area extending out of the positive electrode active material layer in a first direction. A blocking portion is provided on at least one side of the extension area, and the blocking portion is used for shielding a gap between the separator and the positive electrode sheet or a gap between the separator and the negative electrode sheet. The electrode assembly having this structure can block, by means of the blocking portion, burrs or particles generated during use or production of the electrode assembly, so as to alleviate the phenomenon that the burrs or particles enter the electrode assembly, thereby reducing the phenomenon that the separator is damaged or punctured, so as to reduce the risk of short circuit or local temperature rise in the electrode assembly, and be beneficial to improve the use safety of the battery cell.

## Description

### Technical Field

The present application relates to the field of battery technology, and in particular, to an electrode assembly, a battery cell, a battery, and an electrical device.

### Background Art

In recent years, new energy vehicles have developed with a great leap. In the field of electric vehicles, power batteries play an irreplaceable and important role as power sources of the electric vehicles. With the vigorous promotion of new energy vehicles, the demand for power battery products is increasing. As a core component of new energy vehicles, batteries have high requirements in terms of service life, safety, or the like. A battery cell of a battery is obtained by assembling a positive electrode plate, a negative electrode plate and a separator into an electrode assembly (bare cell) in a winding or laminating manner, then putting the bare cell into a shell, and injecting an electrolytic solution. However, it is inevitable to bring in some metal debris or impurity particles in the production process of the battery cell, which pose safety risks to the battery cell.

### Summary

Embodiments of the present application provide an electrode assembly, a battery cell, a battery, and an electrical device, where the safety of the battery cell can be improved.

In a first aspect, an embodiment of the present application provides an electrode assembly, including a negative electrode plate, a separator, and a positive electrode plate, where the separator is disposed between the negative electrode plate and the positive electrode plate; the positive electrode plate includes a positive electrode active material layer, and the separator has an extension area extending out of the positive electrode active material layer in a first direction; and a barrier portion is disposed on at least one side of the extension area, and the barrier portion is used for blocking a gap between the separator and the positive electrode plate or a gap between the separator and the negative electrode plate.

In the foregoing technical solution, the extension area extending out of the positive electrode active material layer of the positive electrode plate in the first direction is disposed on the separator, and the barrier portion is disposed on at least one side of the extension area to block the gap between the separator and the positive electrode plate or the gap between the separator and the negative electrode plate in the first direction, whereby the barrier portion can block burrs or particulate impurities to some extent in the use or production process of the electrode assembly to alleviate the phenomenon that the burrs or particulate impurities enter between the separator and the positive electrode plate or between the separator and the negative electrode plate, so as to effectively reduce damage to the separator by the burrs or particulate impurities, reduce a risk of short circuiting or local temperature rise in the electrode assembly, and improve the safety of use of the battery cell.

In some embodiments, the barrier portion is disposed on each of two sides of the extension area.

In the foregoing technical solution, the barrier portions are disposed on the two sides of the extension area, so that the barrier portions on the two sides of the extension area can block the gap between the separator and the positive electrode plate and the gap between the separator and the negative electrode plate separately, which is beneficial to further reducing the risk of damage to the separator by the burrs or particulate impurities.

In some embodiments, a thickness of the barrier portion protruding from the extension area is d₁, and a thickness of the positive electrode plate is d₂, satisfying d₁ ≤ (d₂+25) µm.

In the foregoing technical solution, the thickness of the barrier portion protruding from the extension area is less than or equal to the thickness of the positive electrode plate plus 25 µm, that is, the thickness of the barrier portion is less than or equal to the thickness of the positive electrode plate plus the assembly gap between the separator and the positive electrode plate, so that the electrode assembly with this structure can reduce interference between the two adjacent separators in the assembly process due to the excessive thickness of the barrier portion, which is beneficial to improving the assembly quality of the electrode assembly.

In some embodiments, 2.5 µm ≤ d₁ ≤ 0.5 × (d₂+25) µm.

In the foregoing technical solution, the thickness of the barrier portion protruding from the extension area is greater than or equal to 2.5 µm and less than or equal to half of the thickness of the positive electrode plate plus the assembly gap between the separator and the positive electrode plate, so that the electrode assembly with this structure can reduce the phenomenon of poor blocking effect of the barrier portion on burrs or particle impurities due to the too small thickness of the barrier portion, and can reduce the risk of mutual interference between the barrier portion and the adjacent separator or electrode plate due to the too large thickness of the barrier portion.

In some embodiments, in the first direction, a width of the barrier portion is d₃, satisfying 0.5 mm ≤ d₃ ≤ 3 mm.

In the foregoing technical solution, the width of the barrier portion in the first direction is 0.5 mm to 3 mm, which can overcome high risk of detachment of the barrier portion during the assembly of the electrode assembly due to the too small width of the barrier portion, and can reduce the phenomenon of material waste caused by the too large width of the barrier portion, thereby reducing the production cost of the electrode assembly.

In some embodiments, the negative electrode plate includes a negative electrode active material layer, and two ends of the negative electrode active material layer extend out of the positive electrode active material layer in the first direction, where the barrier portion goes beyond the negative electrode active material layer in the first direction.

In the foregoing technical solution, the two ends of the negative electrode active material layer of the negative electrode plate in the first direction extend out of the positive electrode active material layer of the positive electrode plate, the barrier portion on the extension area of the separator is configured to go beyond the negative electrode active material layer of the negative electrode plate in the first direction, and the barrier portion is located on one side of the negative electrode active material layer in the first direction, so that the barrier portion can achieve a good blocking effect on the gap between the separator and the positive electrode plate or the gap between the separator and the negative electrode plate, and the phenomenon of interference or extrusion between the barrier portion and the negative electrode plate can be effectively alleviated in the assembly process of the electrode assembly, thereby improving the production quality of the electrode assembly.

In some embodiments, in the first direction, the width of the barrier portion is d₃, and a width of a portion, extending out of the negative electrode active material layer, of the extension area is d₄, satisfying 0.5d₄ ≤ d₃ < d₄.

In the foregoing technical solution, the width of the barrier portion in the first direction is greater than or equal to half the width of the portion, extending out of the negative electrode active material layer, of the extension area and less than the width of the portion, extending out of the negative electrode active material layer, of the extension area, which can reduce the risk of easy detachment of the barrier portion in the assembly process of the electrode assembly due to the too small width of the barrier portion, and can reduce the phenomenon of interference between the barrier portion and the negative electrode active material layer of the negative electrode plate when the width of the barrier portion is greater than that of the portion, extending out of the negative electrode active material layer, of the extension area, thereby improving the assembly quality of the electrode assembly.

In some embodiments, 2 mm ≤ d₄ ≤ 10 mm.

In the foregoing technical solution, the width of the portion, extending out of the negative electrode active material layer, of the extension area in the first direction is 2 mm to 10 mm, which can solve the problem of inconvenient disposal of the barrier portion on the extension area due to the too small size of the portion, extending out of the negative electrode active material layer, of the extension area to reduce machining difficulties between the barrier portion and the extension area, and can reduce the phenomenon of redundancy of the separator due to the too large size of the portion, extending out of the negative electrode active material layer, of the extension area to reduce production costs of the electrode assembly.

In some embodiments, the barrier portion is provided spaced from the negative electrode active material layer in the first direction.

In the foregoing technical solution, the barrier portion is provided spaced from the negative electrode active material layer of the negative electrode plate in the first direction, thereby reducing risks of interference and scratches between the barrier portion and the negative electrode active material layer in the assembly process of the electrode assembly, to improve the production quality of the electrode assembly.

In some embodiments, in the first direction, a negative electrode tab of the negative electrode plate and a positive electrode tab of the positive electrode plate both extend out of the extension area.

In the foregoing technical solution, the negative electrode tab of the negative electrode plate and the positive electrode tab of the positive electrode plate extend out of the extension area in the first direction, which can reduce the obstruction of the barrier portion to the negative electrode tab and the positive electrode tab, to facilitate machining and connection of the negative electrode tab and the positive electrode tab in subsequent manufacturing processes. In addition, the negative electrode tab and the positive electrode tab extend out of the extension area in the first direction, so that the barrier portion can effectively block burrs on the negative electrode tab or the positive electrode tab, to reduce the risk of short circuiting in the battery cell due to the fact that the burrs enter the interior of the electrode assembly.

In some embodiments, a portion, extending out of the extension area, of the negative electrode tab is folded and flattened onto a side, away from the positive electrode active material layer, of the barrier portion; and/or a portion, extending out of the extension area, of the positive electrode tab is folded and flattened onto a side, away from the positive electrode active material layer, of the barrier portion.

In the foregoing technical solution, the negative electrode tab is folded and flattened onto the side, away from the positive electrode active material layer, of the barrier portion, and the positive electrode tab is also folded and flattened onto the side, away from the positive electrode active material layer, of the barrier portion, so that the barrier portion can block particles or burrs generated by the negative electrode tab or the positive electrode tab in the flattening process, to alleviate the phenomenon that the particles or burrs generated by the negative electrode tab or the positive electrode tab enter the interior of the electrode assembly, thereby effectively reducing damage to the separator by the particles or burrs, reducing the risk of short circuiting or local temperature rise in the battery cell, and reducing safety hazards of the battery cell during use.

In some embodiments, in the first direction, the negative electrode tab of the negative electrode plate and the positive electrode tab of the positive electrode plate are located at two ends of the electrode assembly separately.

In the foregoing technical solution, the negative electrode tab of the negative electrode plate and the positive electrode tab of the positive electrode plate are disposed at the two ends of the electrode assembly separately, which can reduce mutual influence between the negative electrode tab and the positive electrode tab to facilitate machining of the negative electrode tab and the positive electrode tab, and can reduce short circuiting between the negative electrode tab and the positive electrode tab.

In some embodiments, two ends of the separator have the barrier portions in the first direction.

In the foregoing technical solution, the barrier portions are disposed at the two ends of the separator in the first direction, so that the barrier portions at the two ends of the separator can block particles or burrs generated in the machining process of the battery cell from entering the interior of the electrode assembly from two ends of the electrode assembly in the first direction, thereby further improving the safety of use of the electrode assembly.

In some embodiments, the barrier portion has a plurality of holes (pores) configured for allowing an electrolytic solution to pass therethrough.

In the foregoing technical solution, the plurality of holes are formed on the barrier portion, so that the barrier portion can block burrs or particle impurities and allow the electrolytic solution to enter the interior of the electrode assembly through the barrier portion, thereby ensuring a wetting effect of the negative electrode plate and the positive electrode plate to improve the performance of the electrode assembly.

In some embodiments, a particle size of particles of the barrier portion d₅, satisfying 100 nm ≤ d₅ ≤ 5 µm.

In the foregoing technical solution, the barrier portion is made of a material having a particle size of 100 nm to 5 µm, which facilitates the formation of particle gaps inside the barrier portion to enable the electrolytic solution to immerse into the interior of the electrode assembly through the barrier portion, and also facilitates the machining of the barrier portion onto the extension area of the separator to reduce machining difficulties.

In some embodiments, a material of the barrier portion includes boehmite or ceramics.

In the foregoing technical solution, the boehmite or ceramics is used as the material of the barrier portion. The barrier portion made of this material has the advantages of inertia and high hardness, which are conducive to improving the structural stability of the barrier portion.

In a second aspect, an embodiment of the present application further provides a battery cell, including a shell and the foregoing electrode assembly, where the electrode assembly is accommodated in the shell.

In a third aspect, an embodiment of the present application further provides a battery, including a box and the foregoing battery cell, where the battery cell is accommodated in the box.

In a fourth aspect, an embodiment of the present application further provides an electrical device, including the foregoing battery cell.

### Brief Description of Drawings

In order to explain the technical solutions in the embodiments of the present application more clearly, accompanying drawings required to use in the embodiments will be simply introduced below. It should be understood that the following drawings show only some embodiments of the present application and should not be regarded as limiting the scope, and other relevant drawings may be obtained based on these drawings by those of ordinary skill in the art without any creative efforts.
FIG. 1 is a schematic structural diagram of a vehicle provided in some embodiments of the present application;
FIG. 2 is a structural exploded view of a battery provided in some embodiments of the present application;
FIG. 3 is a structural exploded view of a battery cell provided in some embodiments of the present application;
FIG. 4 is a schematic structural diagram of an electrode assembly provided in some embodiments of the present application;
FIG. 5 is a sectional view of the electrode assembly provided in some embodiments of the present application;
FIG. 6 is a partially enlarged view of position A of the electrode assembly shown in FIG. 5;
FIG. 7 is a partial sectional view of an electrode assembly provided in other embodiments of the present application;
FIG. 8 is a sectional view of a separator provided in some embodiments of the present application; and
FIG. 9 is a partially enlarged view of position B of the electrode assembly shown in FIG. 5.

Reference numerals: 1000 - vehicle; 100 - battery; 10 - box; 11 - first box body; 12 - second box body; 20 - battery cell; 21 - shell; 211 - shell body; 2111 - opening; 212 - end cover; 22 - electrode assembly; 221 - negative electrode plate; 2211 - negative electrode active material layer; 2212 - negative electrode tab; 2213 - negative electrode current collector; 222 - separator; 2221 - extension area; 2222 - barrier portion; 223 - positive electrode plate; 2231 - positive electrode active material layer; 2232 - positive electrode tab; 2233 - positive electrode current collector; 200 - controller; 300 - motor; X - first direction.

### Detailed Description of Embodiments

To make the objectives, technical solutions and advantages of the embodiments of the present application clearer, the technical solutions in the embodiments of the present application will be described clearly below with reference to the accompanying drawings in the embodiments of the present application. Apparently, the described embodiments are some but not all of the embodiments of the present application. All other embodiments obtained by those of ordinary skill in the art based on the embodiments of the present application without creative efforts shall fall within the protection scope of the present application.

Unless otherwise defined, all technical and scientific terms used in the present application have the same meanings as those commonly understood by technical personnel in the technical field of the present application; the terms used in the specification of the present application are only for the purpose of describing specific embodiments and are not intended to limit the present application; and the terms "include" and "have" in the specification and claims of the present application, the accompanying drawings, and any variations thereof, are intended to cover non-exclusive inclusion. The terms "first", "second", and the like in the specification and claims of the present application or the accompanying drawings are used to distinguish different objects, rather than to describe specific sequences or primary and secondary relationships.

The "embodiment" mentioned in the present application means that specific features, structures or characteristics described in conjunction with the embodiment may be included in at least one embodiment of the present application. The phrase at various locations in the specification does not necessarily refer to the same embodiment, or an independent or alternative embodiment exclusive of another embodiment.

In the description of the present application, it should be noted that, unless otherwise specified and defined, the terms "mounted", "connected", "connection", and "attached" should be broadly understood, for example, the "connection" may be a fixed connection, a detachable connection, an integral connection, a direct connection, a connection through a medium, or a communication of interiors of two elements. Those of ordinary skill in the art may understand the specific meanings of the above terms in the present application according to specific circumstances.

The term "and/or" in the present application is merely an association relationship for describing associated objects, and represents that three relationships may exist. For example, A and/or B may represent the following three cases: A exists alone, both A and B exist, and B exists alone. In addition, the character "/" in the present application generally indicates an "or" relationship between the associated objects.

In the embodiments of the present application, the same reference numerals represent the same components, and for simplicity, detailed descriptions of the same components are omitted in different embodiments. It should be understood that, in the embodiments of the present application shown in the accompanying drawings, dimensions of various components and integrated apparatuses, such as thickness, length, and width, are only illustrative and should not constitute any limitations on the present application.

In the present application, "a plurality of" means two (inclusive) or more.

In the present application, battery cells may include lithium-ion secondary batteries, lithium-ion primary batteries, lithium-sulfur batteries, sodium lithium-ion batteries, sodium-ion batteries, magnesium-ion batteries, or the like, which are not limited by the embodiments of the present application. The battery cells may be cylindrical, flat, cuboid, or in other shapes, which is also not limited by the embodiments of the present application. The battery cells are generally divided into three types according to ways of packaging: cylindrical battery cells, square battery cells and soft package battery cells, which are also not limited in the embodiments of the present application.

The battery mentioned in the embodiments of the present application refers to a single physical module that includes one or more battery cells to provide higher voltage and capacity. For example, the battery mentioned in the present application may include a battery module or a battery pack. The battery generally includes a box used for packaging one or more battery cells or a plurality of battery modules. The box may prevent liquid or other foreign matters from affecting charging or discharging of the battery cells.

The battery cell includes a shell, an electrode assembly and an electrolytic solution, where the shell is used for accommodating the electrode assembly and the electrolytic solution. The electrode assembly consists of a positive electrode plate, a negative electrode plate, and a separator. The battery cell mainly relies on movement of metal ions between the positive electrode plate and the negative electrode plate to work. The positive electrode plate includes a positive electrode current collector and a positive electrode active material layer, a surface of the positive electrode current collector is coated with the positive electrode active material layer, and a portion, not coated with the positive electrode active material layer, of the positive electrode current collector serves as a positive electrode tab to input or output electrical energy of the positive electrode plate. In an example of a lithium-ion battery, a material of the positive electrode current collector may be aluminum, and the positive electrode active material may be lithium cobaltate, lithium iron phosphate, ternary lithium, lithium manganate, or the like. The negative electrode plate includes a negative electrode current collector and a negative electrode active material layer, a surface of the negative current collector is coated with the negative electrode active material layer, and a portion, not coated with the negative electrode active material layer, of the negative electrode current collector serves as a negative electrode tab to input or output electrical energy of the negative electrode plate. A material of the negative electrode current collector may be copper, and the negative electrode active material may be carbon, silicon, or the like. In order to ensure that no fusing occurs when high current passes through, there is a plurality of positive electrode tabs laminated together, and there is a plurality of negative electrode tabs laminated together.

A material of the separator may be polypropylene (PP), polyethylene (PE), or the like. Moreover, the electrode assembly may be of a wound structure or a laminated structure, and the embodiments of the present application are not limited thereto.

Batteries are an important part of the development of new energy nowadays due to their outstanding advantages such as high energy density, low environmental pollution, high power density, long service life, wide adaptability, and small self-discharge coefficient. A battery cell of a battery is obtained by assembling a positive electrode plate, a negative electrode plate and a separator into an electrode assembly (bare cell) in a winding or laminating manner, then putting the bare cell into a shell, closing the bare cell with an end cover, and injecting an electrolytic solution. However, with the continuous development of battery technology, higher requirements are put forward for the performance, safety, and the like of batteries. Therefore, the safety performance of the battery cell determines the safety of the battery during use.

The inventors found, for an ordinary battery cell, a design scheme of all tabs is usually used for an electrode assembly of the battery cell, that is, after a positive electrode plate, a negative electrode plate and a separator of the electrode assembly are wound or laminated, a positive electrode tab of the positive electrode plate and a negative electrode tab of the negative electrode plate are flattened into a flat plane through a flattening process, and then connected to a shell or end cover of the battery cell through adapters or other components to output or input electrical energy of the electrode assembly. A lot of burrs, particulate impurities, or the like are produced in the machining process of the electrode assembly, and the shedding burrs, particulate impurities, or the like easily enter between the positive and negative electrode plates of the electrode assembly, resulting in the risk of damage to the separator by burrs or particulate matters. As a result, the battery cell is prone to short circuits or internal temperature rise during later use, which further poses great safety hazards to the battery cell during use.

Based on the above considerations, in order to solve the problem of safety hazards during the later use of the battery cell, the inventor designed an electrode assembly after in-depth research, including a negative electrode plate, a separator, and a positive electrode plate, where the separator is disposed between the negative electrode plate and the positive electrode plate. The positive electrode plate includes a positive electrode active material layer, and the separator has an extension area extending out of the positive electrode active material layer in a first direction. A barrier portion is disposed on at least one side of the extension area, and the barrier portion is used for blocking a gap between the separator and the positive electrode plate or a gap between the separator and the negative electrode plate.

In the foregoing electrode assembly, the extension area extending out of the positive electrode active material layer of the positive electrode plate in the first direction is disposed on the separator, and the barrier portion is disposed on at least one side of the extension area to block the gap between the separator and the positive electrode plate or the gap between the separator and the negative electrode plate in the first direction, whereby the barrier portion can block burrs or particulate impurities to some extent in the use or production process of the electrode assembly to alleviate the phenomenon that the burrs or particulate impurities enter between the separator and the positive electrode plate or between the separator and the negative electrode plate, so as to effectively reduce damage to the separator by the burrs or particulate impurities, reduce a risk of short circuiting or local temperature rise in the electrode assembly, and improve the safety of use of the battery cell.

The electrode assembly disclosed in the embodiments of the present application may be used, but not limited to, in electrical devices such as vehicles, ships, or aircraft. A power system of the electrical device may be constituted by the battery cell, the battery, and the like disclosed in the present application, which can effectively reduce the risk of short circuiting or internal temperature rise in the battery cell during later use, so as to improve the safety of use of the battery.

An embodiment of the present application provides an electrical device using a battery as a power source. The electrical device may be, but is not limited to, a mobile phone, a tablet computer, a notebook computer, an electric toy, an electric tool, a scooter, an electric vehicle, a ship, or a spacecraft. The electric toy may include a fixed or mobile electric toy, such as a game console, an electric car toy, an electric ship toy, or an electric aircraft toy. The spacecraft may include an airplane, a rocket, a space shuttle, a spaceship, or the like.

For convenient description, the following embodiments are described by an example of a vehicle 1000 as an electrical device in an embodiment of the present application.

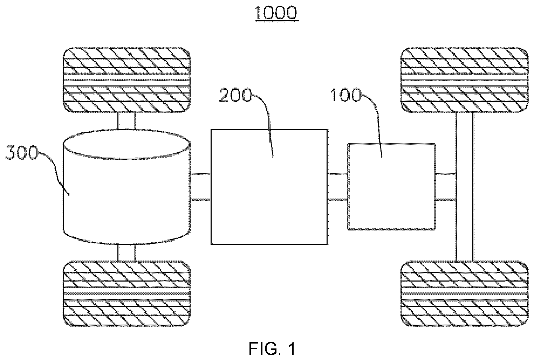

Refer to FIG. 1. FIG. 1 is a schematic structural diagram of a vehicle 1000 provided in some embodiments of the present application. The vehicle 1000 may be a fuel-powered vehicle, a gas-powered vehicle, or a new energy vehicle, and the new energy vehicle may be a battery electric vehicle, a hybrid vehicle, an extended-range vehicle, or the like. A battery 100 is disposed inside the vehicle 1000, and the battery 100 may be disposed at a bottom, head or tail of the vehicle 1000. The battery 100 may be configured to supply power to the vehicle 1000. For example, the battery 100 may be used as an operation power supply of the vehicle 1000. The vehicle 1000 may further include a controller 200 and a motor 300. The controller 200 is used for controlling the battery 100 to supply power to the motor 300, for example, for a working power demand of the vehicle 1000 during startup, navigation and running.

In some embodiments of the present application, the battery 100 may be used not only as an operation power supply of the vehicle 1000, but also as a driving power supply of the vehicle 1000 to replace or partially replace fuel or natural gas to provide driving power for the vehicle 1000.

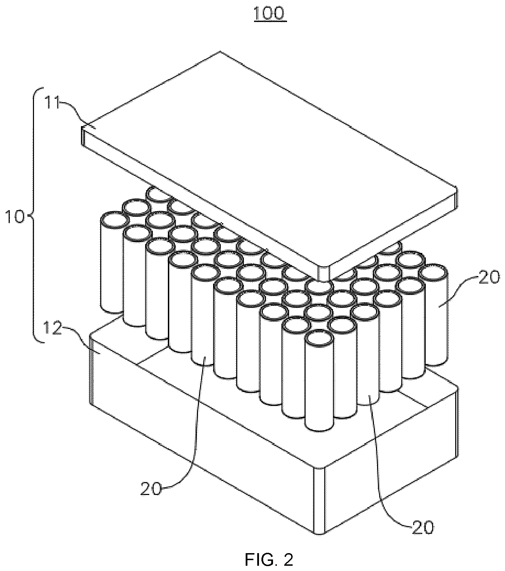

Refer to FIG. 2. FIG. 2 is a structural exploded view of a battery 100 provided in some embodiments of the present application. The battery 100 includes a box 10 and battery cells 20, where the battery cells 20 are accommodated in the box 10. The box 10 is used for providing an assembly space for the battery cells 20, and the box 10 may have many structures. In some embodiments, the box 10 may include a first box body 11 and a second box body 12, the first box body 11 and the second box body 12 cover each other, and the first box body 11 and the second box body 12 jointly confine the assembly space for accommodating the battery cells 20. The second box body 12 may be of a hollow structure with an open end, the first box body 11 may be of a plate-like structure, and the first box body 11 covers an open side of the second box body 12, so that the first box body 11 and the second box body 12 jointly confine the assembly space; or each of the first box body 11 and the second box body 12 may be of a hollow structure with an open side, and the open side of the first box body 11 covers the open side of the second box body 12. Of course, the box 10 formed by the first box body 11 and the second box body 12 may be in various shapes, such as cylindrical or cuboid.

There may be a plurality of battery cells 20 in the battery 100, and the plurality of battery cells 20 may be in series connection, parallel connection, or series-parallel connection. The series-parallel connection refers to a combination of series connection and parallel connection in the plurality of battery cells 20. The plurality of battery cells 20 may be directly connected in series, in parallel, or in series and parallel together, and then the whole formed by the plurality of battery cells 20 is accommodated in the box 10. Of course, the battery 100 may alternatively be in a form of a battery module formed by first connecting the plurality of battery cells 20 in series, in parallel, or in series and parallel, and a plurality of battery modules are then connected in series, in parallel, or in series and parallel to form a whole accommodated in the box 10. The battery 100 may further include other structures, for example, the battery 100 may further include a current collecting component for achieving electrical connection between the plurality of battery cells 20.

In the above, each battery cell 20 may be a secondary battery or a primary battery, or may be a lithium-sulfur battery, a sodium-ion battery, or a magnesium-ion battery, but is not limited to this. The battery cell 20 may be cylindrical, flat, cuboid, or in other shapes. For example, in FIG. 2, the battery cell 20 is of a cylindrical structure.

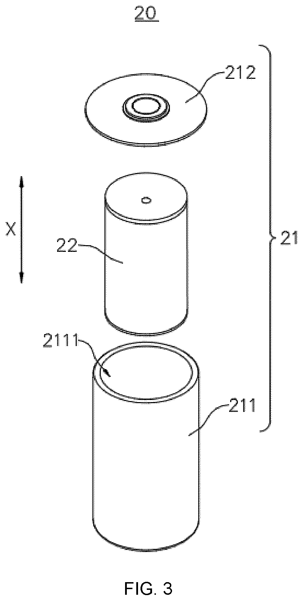

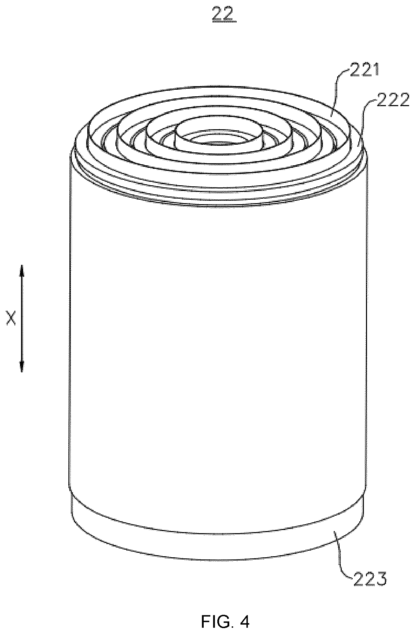

Refer to FIG. 3 and FIG. 4, where FIG. 3 is a structural exploded view of a battery cell 20 provided in some embodiments of the present application, and FIG. 4 is a schematic structural diagram of an electrode assembly 22 provided in some embodiments of the present application. The battery cell 20 includes a shell 21 and an electrode assembly 22, where the shell 21 is used for accommodating the electrode assembly 22.

In the above, the shell 21 may also be used for accommodating an electrolyte, such as an electrolytic solution. The shell 21 may be in various structural forms.

In some embodiments, the shell 21 may include a shell body 211 and an end cover 212, the shell body 211 is of a hollow structure with an opening 2111 on one side, and the end cover 212 covers the opening 2111 of the shell body 211 to form a sealed connection, so as to form a sealed space for accommodating the electrode assembly 22 and the electrolyte.

When the battery cell 20 is assembled, the electrode assembly 22 is first put into the shell body 211, the shell body 211 is filled with the electrolyte, and then the cover body 212 is closed to the opening 2111 of the shell body 211.

The shell body 211 may be in various shapes, such as cylindrical or cuboid. The shape of the shell body 211 may be determined according to a specific shape of the electrode assembly 22. For example, if the electrode assembly 22 is of a cylindrical structure, a cylindrical shell body may be used; or if the electrode assembly 22 is of a cuboid structure, a cuboid shell body may be used. Of course, the end cover 212 may also be of various structures, for example, the end cover 212 is of a plate-like structure or a hollow structure with an opening 2111 at one end. For example, in FIG. 3, the electrode assembly 22 is of a cylindrical structure. Correspondingly, the shell body 211 is of a cylindrical structure, the end cover 212 is of a cylindrical plate-like structure, and the end cover 212 covers the opening 2111 of the shell body 211.

In some embodiments, the battery cell 20 may further include a positive electrode terminal and a negative electrode terminal, the positive electrode terminal is mounted on the end cover 212, and the negative electrode terminal is mounted on an end, opposite to the end cover 212, of the shell body 211. Alternatively, the positive electrode terminal is mounted on the end, opposite to the end cover 212, of the shell body 211, and the negative electrode terminal is mounted on the end cover 212. The positive electrode terminal and the negative electrode terminal are both used for electrical connection with the electrode assembly 22 to input or output the electrical energy of the battery cell 20. The positive electrode terminal and the negative electrode terminal may be directly connected to the electrode assembly 22, for example, by welding or abutting. The positive electrode terminal and the negative electrode terminal may alternatively be indirectly connected to the electrode assembly 22, for example, the positive electrode terminal and the negative electrode terminal abut against or are welded to the electrode assembly 22 through current collecting members.

Understandably, the shell 21 is not limited to the above structure. The shell 21 may alternatively be of other structures. For example, the shell 21 includes a shell body 211 and two end covers 212, the shell body 211 is of a hollow structure with openings 2111 on two opposite sides, and one end cover 212 corresponds to one opening 2111 of the shell body 211 and forms a sealed connection to form a sealed space for accommodating the electrode assembly 22 and the electrolyte.

In some embodiments, the battery cell 20 may further include a pressure relief mechanism mounted on the end cover 212 or on the shell body 211. The pressure relief mechanism is used for releasing pressure inside the battery cell 20 when the internal pressure or temperature of the battery cell 20 reaches a predetermined value.

For example, the pressure relief mechanism may be a component such as an explosion-proof valve, a rupture disc, a gas valve, a pressure relief valve, or a safety valve.

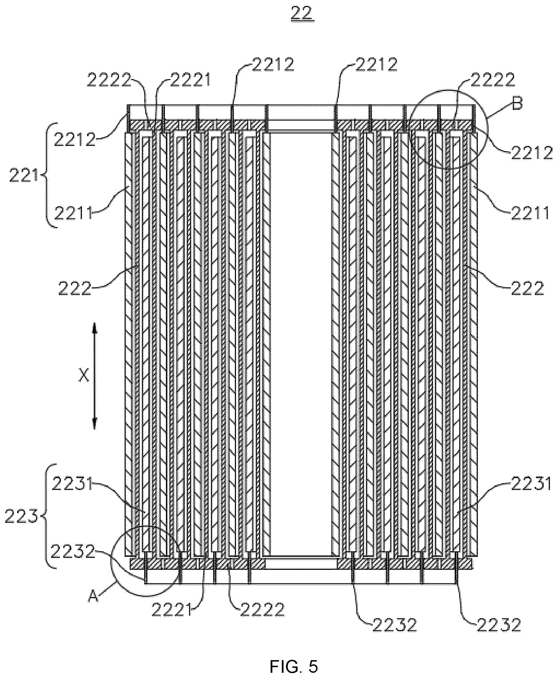

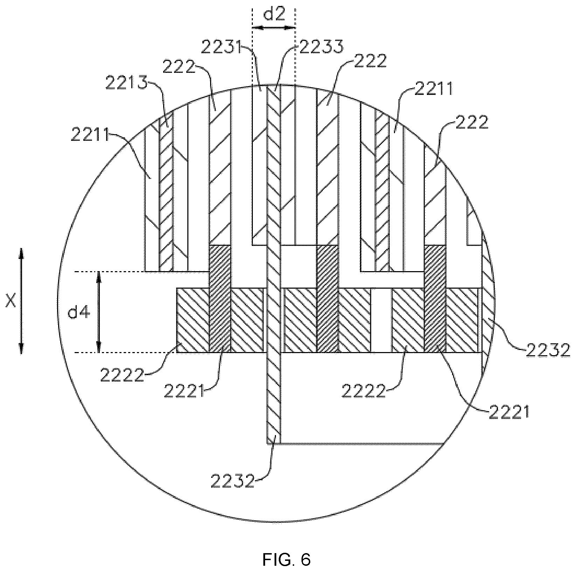

According to some embodiments of the present application, refer to FIG. 4 and further refer to FIG. 5 and FIG. 6, where FIG. 5 is a sectional view of the electrode assembly 22 provided in some embodiments of the present application, and FIG. 6 is a partially enlarged view of position A of the electrode assembly 22 shown in FIG. 5. The present application provides an electrode assembly 22. The electrode assembly 22 includes a negative electrode plate 221, a separator 222, and a positive electrode plate 223. The separator 222 is disposed between the negative electrode plate 221 and the positive electrode plate 223. The positive electrode plate 223 includes a positive electrode active material layer 2231, and the separator 222 has an extension area 2221 extending out of the positive electrode active material layer 2231 in a first direction X. A barrier portion 2222 is disposed on at least one side of the extension area 2221, and the barrier portion 2222 is used for blocking a gap between the separator 222 and the positive electrode plate 223 or a gap between the separator 222 and the negative electrode plate 221.

The positive electrode active material layer 2231 is an active material coated on one side of a positive electrode current collector 2233 of the positive electrode plate 223 for electrochemical reaction, and the material of the positive electrode active material layer 2231 may be lithium cobaltate, lithium iron phosphate, ternary lithium, lithium manganate, or the like. In some embodiments, an insulating layer may be further disposed on an edge of the positive electrode active material layer 2231. The positive electrode plate 223 further includes a positive electrode tab 2232, the positive electrode tab 2232 is an area, not coated with the active material layer 2231, of the positive electrode current collector 2233 of the positive electrode plate 223 to output or input electrical energy, and the positive electrode tab 2232 is located on one side of the positive electrode active material layer 2231 in the first direction X, namely, the positive electrode tab 2232 is located at one end of the electrode assembly 22 in the first direction X, that is, the first direction X is an arrangement direction of an area, coated with the active material, of the positive electrode current collector 2233 and the area, not coated with the active material, of the positive electrode current collector 2233.

The gap between the separator 222 and the positive electrode plate 223, or the gap between the separator 222 and the negative electrode plate 221, refers to an assembly gap between the separator 222 and the negative electrode plate 221 or the positive electrode plate 223, because the separator 222 cannot closely fit the negative electrode plate 221 or the positive electrode plate 223 due to assembly errors after the assembly of the negative electrode plate 221, the separator 222, and the positive electrode plate 223 is completed.

In the above, the barrier portion 2222 is used for blocking the gap between the separator 222 and the positive electrode plate 223 or the gap between the separator 222 and the negative electrode plate 221, that is, the barrier portion 2222 may block a part of the gap between the separator 222 and the positive electrode plate 223 or the gap between the separator 222 and the negative electrode plate 221, or completely block the gap between the separator 222 and the positive electrode plate 223 or the gap between the separator 222 and the negative electrode plate 221, namely, at least a part of a projection of the barrier portion 2222 in the first direction X is located within the gap between the separator 222 and the positive electrode plate 223 or the gap between the separator 222 and the negative electrode plate 221, so that the barrier portion 2222 can block the gap between the separator 222 and the positive electrode plate 223 or the gap between the separator 222 and the negative electrode plate 221 in the first direction X.

The separator 222 has the extension area 2221 extending out of the positive electrode active material layer 2231 in the first direction X, that is, at least one end of the separator 222 extends out of the positive electrode active material layer 2231 of the positive electrode plate 223 in the first direction X, the portion of the separator 222 extending out of the positive electrode active material layer 2231 of the positive electrode plate 223 is the extension area 2221, and the barrier portion 2222 protrudes from at least one side of the extension area 2221 in a thickness direction of the separator 222.

The separator 222 has the extension area 2221 extending out of the positive electrode active material layer 2231 in the first direction X, that is, the separator 222 has the extension area 2221 at one end in the first direction X, or the separator 222 has the extension area 2221 at both ends in the first direction X. Correspondingly, the barrier portion 2222 may be disposed at one end of the separator 222, or the barrier portion 2222 may be disposed at both ends of the separator 222. For example, in FIG. 5, the separator 222 has the extension areas 2221 at two ends in the first direction X, and the barrier portions 2222 are disposed in the two extension areas 2221.

The barrier portion 2222 is disposed on at least one side of the extension area 2221, that is, the barrier portion 2222 is disposed on one side of the extension area 2221, or the barrier portion 2222 is disposed on two sides of the extension area 2221. For example, in FIG. 6, the barrier portion 2222 is disposed on two sides of the extension area 2221.

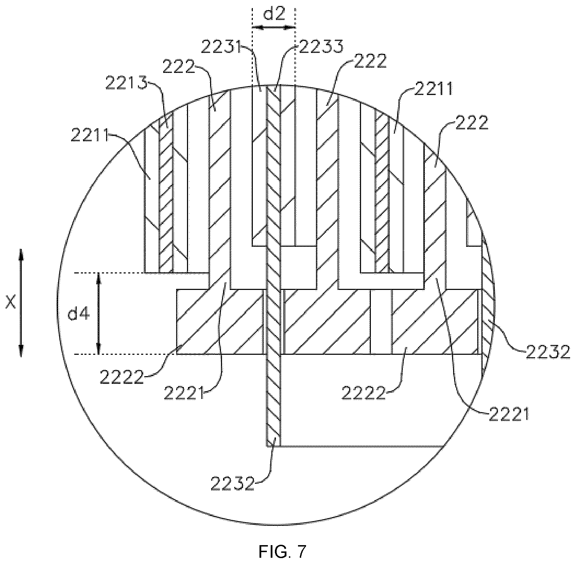

In some embodiments, the barrier portion 2222 may be disposed on the extension area 2221 of the separator 222 by a production process such as coating or bonding. For example, a material of the barrier portion 2222 may be inert and hard, such as boehmite or ceramics. Of course, in other embodiments, refer to FIG. 7, where FIG. 7 is a partial sectional view of an electrode assembly provided in other embodiments of the present application. The barrier portion 2222 and the separator 222 may alternatively be of an integrated structure, that is, the barrier portion 2222 and the extension area 2221 of the separator 222 are made by an integrated molding process, such as injection molding or punching.

It should be noted that the electrode assembly 22 is a component that undergoes electrochemical reactions in the battery cell 20. The electrode assembly 22 may be of a wound structure formed by winding the negative electrode plate 221, the separator 222 and the positive electrode plate 223, or a laminated structure formed by laminating the negative electrode plate 221, the separator 222 and the positive electrode plate 223, whereby the negative electrode plate 221, the separator 222 and the positive electrode plate 223 are superimposed, and the separator 222 is located between the negative electrode plate 221 and the positive electrode plate 223. For example, in FIG. 4, the electrode assembly 22 is a wound structure formed by winding the negative electrode plate 221, the separator 222 and the positive electrode plate 223.

The extension area 2221 extending out of the positive electrode active material layer 2231 of the positive electrode plate 223 in the first direction X is disposed on the separator 222, the barrier portion 2222 is disposed on at least one side of the extension area 2221, and the barrier portion 2222 is enabled to block the gap between the separator 222 and the positive electrode plate 223 or the gap between the separator 222 and the negative electrode plate 221 in the first direction X, whereby the barrier portion 2222 can block burrs or particulate impurities to some extent in the use or production process of the electrode assembly 22 to alleviate the phenomenon that the burrs or particulate impurities enter between the separator 222 and the positive electrode plate 223 or between the separator 222 and the negative electrode plate 221, so as to effectively reduce damage to the separator 222 by the burrs or particulate impurities, reduce the risk of short circuiting or local temperature rise in the electrode assembly 22, and improve the safety of use of the battery cell 20.

According to some embodiments of the present application, as shown in FIG. 5 and FIG. 6, the barrier portion 2222 is disposed on each of two sides of the extension area 2221. That is, the barrier portions 2222 protrude from the two sides of the extension area 2221 in the thickness direction of the separator 222.

The barrier portions 2222 are disposed on the two sides of the extension area 2221, so that the barrier portions 2222 on the two sides of the extension area 2221 can block the gap between the separator 222 and the positive electrode plate 223 and the gap between the separator 222 and the negative electrode plate 221 separately, which is beneficial to further reducing the risk of damage to the separator 222 by the burrs or particulate impurities.

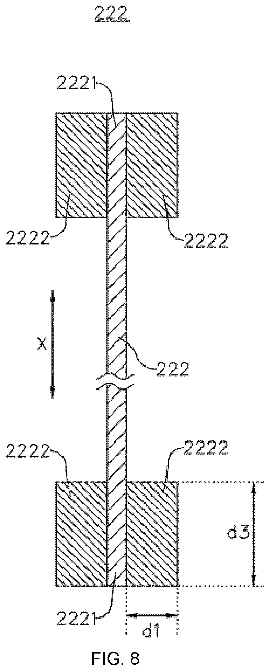

According to some embodiments of the present application, refer to FIG. 5 and FIG. 6 and further refer to FIG. 8, where FIG. 8 is a sectional view of the separator 222 provided in some embodiments of the present application. A thickness of the barrier portion 2222 protruding from the extension area 2221 is d₁, and a thickness of the positive electrode plate 223 is d₂, satisfying d₁ ≤ (d₂+25) µm.

In the above, for the ordinary electrode assembly 22, the thickness of the positive electrode plate 223 is usually greater than that of the negative electrode plate 221. In the assembly process of the electrode assembly 22, due to assembly errors and other phenomena, there is usually an assembly gap between the separator 222 and the positive electrode plate 223 or the negative electrode plate 221, that is, in the thickness direction of the separator 222, the distance between the two separators 222 adjacent to the positive electrode plate 223 is the thickness of the positive electrode plate 223 plus the assembly gap between the positive electrode plate 223 and the two separators 222. Generally, the assembly gap between the positive electrode plate 223 and the two separators 222 is 5 µm to 25 µm. Therefore, the maximum distance between the two separators 222 adjacent to the positive electrode plate 223 is (d₂+25) µm.

It should be noted that the thickness of the positive electrode plate 223 is the thickness of the positive electrode plate 223 at a position where the positive electrode active material layer 2231 is disposed.

The thickness of the barrier portion 2222 protruding from the extension area 2221 is less than or equal to the thickness of the positive electrode plate 223 plus 25 µm, that is, the thickness of the barrier portion 2222 is less than or equal to the thickness of the positive electrode plate 223 plus the assembly gap between the separator 222 and the positive electrode plate 223, so that the electrode assembly 22 with this structure can reduce interference between the two adjacent separators 222 in the assembly process due to the excessive thickness of the barrier portion 2222, which is beneficial to improving the assembly quality of the electrode assembly 22.

In some embodiments, with continued reference to FIGs. 5, 6 and 8, 2.5 µm ≤ d₁ ≤ 0.5 × (d₂+25) µm.

In the above description, in the thickness direction of the separator 222, the assembly gap between the positive electrode plate 223 and the two separators 222 is 5 µm to 25 µm. Therefore, the minimum assembly gap between the separator 222 and the positive electrode plate 223 is 2.5 µm. Similarly, the minimum assembly gap between the separator 222 and the negative electrode plate 221 is also 2.5 µm. In this case, the thickness of the barrier portion 2222 protruding from the extension area 2221 is greater than or equal to 2.5 µm, which can satisfy the minimum gap between the separator 222 and the positive electrode plate 223 or the negative electrode plate 221. In the embodiment where the barrier portions 2222 are disposed on two sides of the extension area 2221, that is, the barrier portions 2222 protrude from the opposite sides of the extension areas 2221 of the two adjacent separators 222 in the thickness direction of the separator 222, only the thickness of the barrier portion 2222 protruding from the extension area 2221 is set to half the distance between the two separators 222 to alleviate mutual interference and compression between the two barrier portions 2222.

The thickness of the barrier portion 2222 protruding from the extension area 2221 is greater than or equal to 2.5 µm and less than or equal to half of the thickness of the positive electrode plate 223 plus the assembly gap between the separator 222 and the positive electrode plate 223, so that the electrode assembly 22 with this structure can reduce the phenomenon of poor blocking effect of the barrier portion 2222 on burrs or particle impurities due to the too small thickness of the barrier portion 2222, and can reduce the risk of mutual interference between the barrier portion 2222 and the adjacent separator 222 or electrode plate due to the too large thickness of the barrier portion 2222.

According to some embodiments of the present application, as shown in FIG. 8, in the first direction X, a width of the barrier portion 2222 is d₃, satisfying 0.5 mm ≤ d₃ ≤ 3 mm.

The width of the barrier portion 2222 in the first direction X is 0.5 mm to 3 mm, which can overcome high risk of detachment of the barrier portion 2222 during the assembly of the electrode assembly 22 due to the too small width of the barrier portion 2222, and can reduce the phenomenon of material waste caused by the too large width of the barrier portion 2222, thereby reducing the production cost of the electrode assembly 22.

According to some embodiments of the present application, as shown in FIG. 5 and FIG. 6, the negative electrode plate 221 includes a negative electrode active material layer 2211, and two ends of the negative electrode active material layer 2211 extend out of the positive electrode active material layer 2231 in the first direction X. The barrier portion 2222 goes beyond the negative electrode active material layer 2211 in the first direction X.

The negative electrode active material layer 2211 is an active material coated on one side of a negative electrode current collector 2213 of the negative electrode plate 221 for electrochemical reaction, and the material of the negative electrode active material layer 2211 may be carbon, silicon, or the like. The negative electrode plate 221 further includes a negative electrode tab 2212, the negative electrode tab 2212 is an area, not coated with the negative electrode active material layer 2211, of the negative electrode current collector 2213 of the negative electrode plate 221 to output or input electrical energy, and the negative electrode tab 2212 is located on one side of the negative electrode active material layer 2211 in the first direction X, namely, the negative electrode tab 2212 is located at one end of the electrode assembly 22 in the first direction X. It should be noted that the negative electrode tab 2212 and the positive electrode tab 2232 may be located at the same end of the electrode assembly 22 in the first direction X, or at two ends of the electrode assembly 22 in the first direction X. For example, in FIG. 5, the negative electrode tab 2212 and the positive electrode tab 2232 are separately located at two ends of the electrode assembly 22 in the first direction X.

In the above, the barrier portion 2222 goes beyond the negative electrode active material layer 2211 in the first direction X, namely, the barrier portion 2222 is located on one side of the negative electrode active material layer 2211 in the first direction X, that is, the barrier portion 2222 is disposed on the portion, extending out of the negative electrode active material layer 2211, of the extension area 2221 of the separator 222 in the first direction X.

For example, in FIG. 5 and FIG. 6, the separator 222 has the extension areas 2221 at two ends, and the barrier portions 2222 are disposed on the portions, extending out of the negative electrode active material layer 2211, of the two extension areas 2221 in the first direction X.

Two ends of the negative electrode active material layer 2211 of the negative electrode plate 221 in the first direction X extend out of the positive electrode active material layer 2231 of the positive electrode plate 223, the barrier portion 2222 on the extension area 2221 of the separator 222 is configured to go beyond the negative electrode active material layer 2211 of the negative electrode plate 221 in the first direction X, and the barrier portion 2222 is located on one side of the negative electrode active material layer 2211 in the first direction X, so that the barrier portion 2222 can achieve a good blocking effect on the gap between the separator 222 and the positive electrode plate 223 or the gap between the separator 222 and the negative electrode plate 221, and the phenomenon of interference or extrusion between the barrier portion 2222 and the negative electrode plate 221 can be effectively alleviated in the assembly process of the electrode assembly 22, thereby improving the production quality of the electrode assembly 22.

According to some embodiments of the present application, with reference to FIGs. 5, 6 and 8, in the first direction X, the width of the barrier portion 2222 is d₃, and a width of the portion, extending out of the negative electrode active material layer 2211, of the extension area 2221 is d₄, satisfying 0.5d₄ ≤ d₃ < d₄.

In the above description, 0.5d₄ ≤ d₃ < d₄, that is, the width of the barrier portion 2222 in the first direction X is greater than or equal to half the width of the portion, extending out of the negative electrode active material layer 2211, of the extension area 2221 and less than the width of the portion, extending out of the negative electrode active material layer 2211, of the extension area 2221.

The electrode assembly 22 with this structure can reduce the risk of easy detachment of the barrier portion 2222 in the assembly process of the electrode assembly 22 due to the too small width of the barrier portion 2222, and can reduce the phenomenon of interference between the barrier portion 2222 and the negative electrode active material layer 2211 of the negative electrode plate 221 when the width of the barrier portion 2222 is greater than that of the portion, extending out of the negative electrode active material layer 2211, of the extension area 2221, thereby improving the assembly quality of the electrode assembly 22.

According to some embodiments of the present application, with continued reference to FIGs. 5, 6 and 8, 2 mm ≤ d₄ ≤ 10 mm.

In the above, 2 mm ≤ d₄ ≤ 10 mm, that is, the portion, extending out of the negative electrode active material layer 2211, of the extension area 2221 has a size of 2 mm to 10 mm in the first direction X.

The width of the portion, extending out of the negative electrode active material layer 2211, of the extension area 2221 in the first direction X is 2 mm to 10 mm, which can solve the problem of inconvenient disposal of the barrier portion 2222 on the extension area 2221 due to the too small size of the portion, extending out of the negative electrode active material layer 2211, of the extension area 2221 to reduce machining difficulties between the barrier portion 2222 and the extension area 2221, and can reduce the phenomenon of redundancy of the separator 222 due to the too large size of the portion, extending out of the negative electrode active material layer 2211, of the extension area 2221 to reduce production costs of the electrode assembly 22.

According to some embodiments of the present application, as shown in FIG. 6, the barrier portion 2222 is provided spaced from the negative electrode active material layer 2211 in the first direction X.

The barrier portion 2222 is provided spaced from the negative electrode active material layer 2211, namely, there is a gap between the barrier portion 2222 and the negative electrode active material layer 2211 of the negative electrode plate 221 in the first direction X to reduce the phenomenon that the barrier portion 2222 abuts against the negative electrode active material layer 2211.

The barrier portion 2222 is provided spaced from the negative electrode active material layer 2211 of the negative electrode plate 221 in the first direction X, thereby reducing risks of interference and scratches between the barrier portion 2222 and the negative electrode active material layer 2211 in the assembly process of the electrode assembly 22, to improve the production quality of the electrode assembly 22.

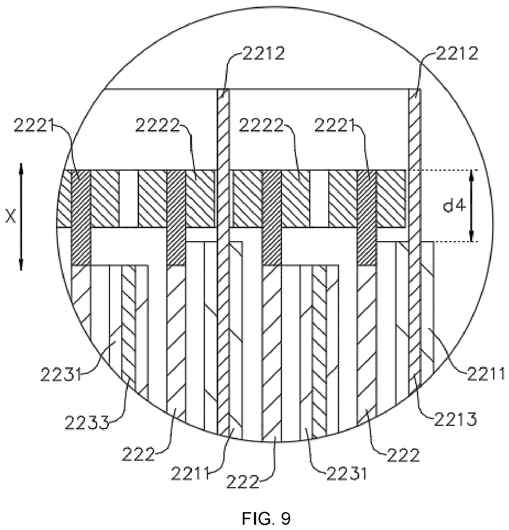

According to some embodiments of the present application, refer to FIG. 5 and FIG. 6 and further refer to FIG. 9, where FIG. 9 is a partially enlarged view of position B of the electrode assembly 22 shown in FIG. 5. In the first direction X, the negative electrode tab 2212 of the negative electrode plate 221 and the positive electrode tab 2232 of the positive electrode plate 223 both extend out of the extension area 2221.

In FIG. 6, the positive electrode tab 2232 is an area, not coated with the active material, of the positive electrode current collector 2233 of the positive electrode plate 223 to output or input electrical energy. In FIG. 9, the negative electrode tab 2212 is an area, not coated with the active material, of the negative electrode current collector 2213 of the negative electrode plate 221 to output or input electrical energy.

The negative electrode tab 2212 and the positive electrode tab 2232 both extend out of the extension area 2221, that is, the negative electrode tab 2212 and the positive electrode tab 2232 both have a portion extending out of the extension area 2221 of the separator 222 in the first direction X.

It should be noted that the negative electrode tab 2212 and the positive electrode tab 2232 may be located at the same end of the electrode assembly 22 in the first direction X, and both extend out of the extension area 2221 of the separator 222, for example, in the electrode assembly 22 of a laminated structure. Of course, the negative electrode tab 2212 and the positive electrode tab 2232 may be separately located at two ends of the electrode assembly 22 in the first direction X, and both extend out of the extension area 2221 of the separator 222, for example, in the electrode assembly 22 of a laminated structure or the electrode assembly 22 of a wound structure. For example, in FIG. 5, the negative electrode tab 2212 and the positive electrode tab 2232 may be separately located at two ends of the electrode assembly 22 in the first direction X, and both extend out of the extension area 2221 of the separator 222.

The negative electrode tab 2212 of the negative electrode plate 221 and the positive electrode tab 2232 of the positive electrode plate 223 extend out of the extension area 2221 in the first direction X, which can reduce the obstruction of the barrier portion 2222 to the negative electrode tab 2212 and the positive electrode tab 2232, to facilitate machining and connection of the negative electrode tab 2212 and the positive electrode tab 2232 in subsequent manufacturing processes. In addition, the negative electrode tab 2212 and the positive electrode tab 2232 extend out of the extension area 2221 in the first direction X, so that the barrier portion 2222 can effectively block burrs on the negative electrode tab 2212 or the positive electrode tab 2232, to reduce the risk of short circuiting in the battery cell 20 due to the fact that the burrs enter the interior of the electrode assembly 22.

According to some embodiments of the present application, the portion, extending out of the extension area 2221, of the negative electrode tab 2212 is folded and flattened onto a side, away from the positive electrode active material layer 2231, of the barrier portion 2222. And/or, the portion, extending out of the extension area 2221, of the positive electrode tab 2232 is folded and flattened onto a side, away from the positive electrode active material layer 2231, of the barrier portion 2222.

For example, in FIG. 5, the negative electrode tab 2212 and the positive electrode tab 2232 may be separately located at two ends of the electrode assembly 22 in the first direction X, the portion, extending out of the extension area 2221, of the negative electrode tab 2212 is flattened onto the side, away from the positive electrode active material layer 2231, of the barrier portion 2222, and the portion, extending out of the extension area 2221, of the positive electrode tab 2232 is flattened onto the side, away from the positive electrode active material layer 2231, of the barrier portion 2222. Of course, in other embodiments, only the portion, extending out of the extension area 2221, of the negative electrode tab 2212 is folded and flattened onto the side, away from the positive electrode active material layer 2231, of the barrier portion 2222, or only the portion, extending out of the extension area 2221, of the positive electrode tab 2232 is folded and flattened onto the side, away from the positive electrode active material layer 2231, of the barrier portion 2222.

The negative electrode tab 2212 is folded and flattened onto the side, away from the positive electrode active material layer 2231, of the barrier portion 2222, and the positive electrode tab 2232 is also folded and flattened onto the side, away from the positive electrode active material layer 2231, of the barrier portion 2222, so that the barrier portion 2222 can block particles or burrs generated by the negative electrode tab 2212 or the positive electrode tab 2232 in the flattening process, to alleviate the phenomenon that the particles or burrs generated by the negative electrode tab 2212 or the positive electrode tab 2232 enter the interior of the electrode assembly 22, thereby effectively reducing damage to the separator 222 by the particles or burrs, reducing the risk of short circuiting or local temperature rise in the battery cell 20, and reducing safety hazards of the battery cell 20 during use.

According to some embodiments of the present application, as shown in FIGs. 5, 6 and 9, the negative electrode tab 2212 and the positive electrode tab 2232 are located at two ends of the electrode assembly 22 separately in the first direction X.

The negative electrode tab 2212 of the negative electrode plate 221 and the positive electrode tab 2232 of the positive electrode plate 223 are disposed at the two ends of the electrode assembly 22 separately, which can reduce mutual influence between the negative electrode tab 2212 and the positive electrode tab 2232 to facilitate machining of the negative electrode tab 2212 and the positive electrode tab 2232, and can reduce short circuiting between the negative electrode tab 2212 and the positive electrode tab 2232.

In some embodiments, with continued reference to FIGs. 5, 6 and 9, two ends of the separator 222 have the barrier portions 2222 in the first direction X.

In the above, the two ends of the separator 222 have the barrier portions 2222, that is, the two ends of the separator 222 have the extension areas 2221 in the first direction X, and the barrier portions 2222 are disposed in the extension areas 2221 at the two ends.

For example, in FIG. 6 and FIG. 9, the barrier portion 2222 is disposed on the portion, extending out of the negative electrode active material layer 2211 of the negative electrode plate 221, of the extension area 2221, and the barrier portions 2222 are disposed on two sides of the extension area 2221.

The barrier portions 2222 are disposed at the two ends of the separator 222 in the first direction X, so that the barrier portions 2222 at the two ends of the separator 222 can block particles or burrs generated in the machining process of the battery cell 20 from entering the interior of the electrode assembly 22 from two ends of the electrode assembly 22 in the first direction X, thereby further improving the safety of use of the electrode assembly 22.

According to some embodiments of the present application, the barrier portion 2222 has a plurality of holes through which the electrolytic solution passes.

In the above, the plurality of holes of the barrier portion 2222 are through gaps formed between the particles of the barrier portion 2222, so that the electrolytic solution can penetrate the barrier portion 2222 and then enter the interior of the electrode assembly 22.

The plurality of holes are formed on the barrier portion 2222, so that the barrier portion 2222 can block burrs or particle impurities and allow the electrolytic solution to enter the interior of the electrode assembly 22 through the barrier portion 2222, thereby ensuring a wetting effect of the negative electrode plate 221 and the positive electrode plate 223 to improve the performance of the electrode assembly 22.

According to some embodiments of the present application, a particle size of particels of the barrier portion 2222 is d₅, satisfying 100 nm ≤ d₅ ≤ 5 µm.

In the above, 100 nm ≤ d₅ ≤ 5 µm, namely, the material of the barrier portion 2222 has a particle size of 100 nm to 5 µm. In the actual production and processing process, the material having a particle size of 150 nm to 400 nm is preferably used for the barrier portion 2222.

For example, the material of the barrier portion 2222 includes boehmite or ceramics. The boehmite or ceramics is used as the material of the barrier portion 2222. The barrier portion 2222 made of this material has the advantages of inertia and high hardness, which are conducive to improving the structural stability of the barrier portion 2222.

The barrier portion 2222 is made of the material having the particle size of 100 nm to 5 µm, which facilitates the formation of particle gaps inside the barrier portion 2222 to enable the electrolytic solution to immerse into the interior of the electrode assembly 22 through the barrier portion 2222, and also facilitates the machining of the barrier portion 2222 onto the extension area 2221 of the separator 222 to reduce machining difficulties.

According to some embodiments of the present application, an embodiment of the present application further provides a battery cell 20, including a shell 21 and the electrode assembly 22 in any of the above solutions, where the electrode assembly 22 is accommodated in the shell 21.

According to some embodiments of the present application, an embodiment of the present application further provides a battery 100. The battery 100 includes a box 10 and the battery cell 20 in any of the above solutions, and the battery cell 20 is accommodated in the box 10.

According to some embodiments of the present application, an embodiment of the present application further provides an electrical device, including the battery cell 20 in any of the above solutions, where the battery cell 20 is used for providing electrical energy to the electrical device.

The electrical device may be any of the foregoing devices or systems using the battery cell 20.

According to some embodiments of the present application, as shown in FIGs. 4 to 6 and FIGs. 8 to 9, the present application provides an electrode assembly 22. The electrode assembly 22 includes a negative electrode plate 221, a separator 222, and a positive electrode plate 223. The separator 222 is disposed between the negative electrode plate 221 and the positive electrode plate 223. The positive electrode plate 223 includes a positive electrode active material layer 2231 and a positive electrode tab 2232 arranged in a first direction X, the negative electrode plate 221 includes a negative electrode active material layer 2211 and a negative electrode tab 2212 arranged in the first direction X, two ends of the negative electrode active material layer 2211 extend out of the positive electrode active material layer 2231 in the first direction X, and the negative electrode tab 2212 and the positive electrode tab 2232 are located at two ends of the electrode assembly 22 separately in the first direction X. Two ends of the separator 222 have extension areas 2221 extending out of the positive electrode active material layer 2231 in the first direction X, barrier portions 2222 protrude from two sides of a portion, extending out of the negative electrode active material layer 2211, of the extension area 2221 in the first direction X, and the barrier portions 2222 are provided spaced from the negative electrode active material layer 2211. Both the positive electrode tab 2232 and the negative electrode tab 2212 extend out of the extension area 2221 in the first direction X, a portion, extending out of the extension area 2221, of the negative electrode tab 2212 is folded and flattened onto a side, away from the negative electrode active material layer 2211, of the barrier portion 2222, and a portion, extending out of the extension area 2221, of the positive electrode tab 2232 is folded and flattened onto a side, away from the negative electrode active material layer 2211, of the barrier portion 2222. A thickness of the barrier portion 2222 protruding from the extension area 2221 is d₁, and a thickness of the positive electrode plate 223 is d₂, satisfying 2.5 µm ≤ d₁ ≤ 0.5 × (d₂+25) µm. In the first direction X, a width of the barrier portion 2222 is d₃, and a width of the portion, extending out of the negative electrode active material layer 2211, of the extension area 2221 is d₄, satisfying 0.5d₄ ≤ d₃ < d₄, and 2 mm ≤ d₄ ≤ 10 mm.

It should be noted that the embodiments in the present application and the features of the embodiments may be combined with each other on a non-conflict basis.

Described above are merely preferred embodiments of the present application, and the present application is not limited thereto. Various modifications and variations may be made to the present application for those skilled in the art. Any modifications, equivalent substitutions, improvements, and the like made within the spirit and principle of the present application shall fall within the protection scope of the present application.

## Claims

1. An electrode assembly, comprising a negative electrode plate, a separator, and a positive electrode plate, wherein the separator is disposed between the negative electrode plate and the positive electrode plate;
the positive electrode plate comprises a positive electrode active material layer, and the separator has an extension area extending out of the positive electrode active material layer in a first direction; and
a barrier portion is disposed on at least one side of the extension area, and the barrier portion is configured for blocking a gap between the separator and the positive electrode plate or a gap between the separator and the negative electrode plate.

2. The electrode assembly according to claim 1, wherein the barrier portion is disposed on each of two sides of the extension area.

3. The electrode assembly according to claim 1 or 2, wherein a thickness of the barrier portion protruding from the extension area is d₁, and a thickness of the positive electrode plate is d₂, satisfying d₁ ≤ (d₂+25) µm.

4. The electrode assembly according to claim 3, wherein 2.5 µm ≤ d₁ ≤ 0.5 × (d₂+25) µm.

5. The electrode assembly according to any one of claims 1-4, wherein in the first direction, a width of the barrier portion is d₃, satisfying 0.5 mm ≤ d₃ ≤ 3 mm.

6. The electrode assembly according to any one of claims 1-5, wherein the negative electrode plate comprises a negative electrode active material layer, and two ends of the negative electrode active material layer both extend out of the positive electrode active material layer in the first direction,
wherein the barrier portion goes beyond the negative electrode active material layer in the first direction.

7. The electrode assembly according to claim 6, wherein in the first direction, a width of the barrier portion is d₃, and a width of a portion of the extension area extending out of the negative electrode active material layer is d₄, satisfying 0.5d₄ ≤ d₃ < d₄.

8. The electrode assembly according to claim 7, wherein 2 mm ≤ d₄ ≤ 10 mm.

9. The electrode assembly according to any one of claims 6-8, wherein the barrier portion is provided spaced from the negative electrode active material layer in the first direction.

10. The electrode assembly according to any one of claims 1-9, wherein in the first direction, a negative electrode tab of the negative electrode plate and a positive electrode tab of the positive electrode plate both extend out of the extension area.

11. The electrode assembly according to claim 10, wherein a portion of the negative electrode tab extending out of the extension area is folded and flattened onto a side of the barrier portion away from the positive electrode active material layer; and/or
a portion of the positive electrode tab extending out of the extension area is folded and flattened onto a side of the barrier portion away from the positive electrode active material layer.

12. The electrode assembly according to any one of claims 1-11, wherein in the first direction, the negative electrode tab of the negative electrode plate and the positive electrode tab of the positive electrode plate are located at two ends of the electrode assembly separately.

13. The electrode assembly according to any one of claims 1-12, wherein two ends of the separator are each provided with the barrier portion in the first direction.

14. The electrode assembly according to any one of claims 1-13, wherein the barrier portion has a plurality of holes configured for allowing an electrolytic solution to pass therethrough.

15. The electrode assembly according to any one of claims 1-14, wherein a particle size of particles of the barrier portion is d₅, satisfying 100 nm ≤ d₅ ≤ 5 µm.

16. The electrode assembly according to any one of claims 1-15, wherein a material of the barrier portion comprises boehmite or ceramic.

17. A battery cell, comprising:
a shell; and
the electrode assembly according to any one of claims 1-16, wherein the electrode assembly is accommodated in the shell.

18. A battery, comprising:
a box; and
the battery cell according to claim 17, wherein the battery cell is accommodated in the box.

19. An electrical device, comprising the battery cell according to claim 17.
